Europäisches Patentamt

European Patent Office

Office européen des brevets

(11) Numéro de publication : **0 422 736 B1**

# (12) FASCICULE DE BREVET EUROPEEN

(45) Date de publication du fascicule du brevet :
**11.01.95 Bulletin 95/02**

(51) Int. Cl.$^6$ : **G02B 5/08**, G21K 1/06,
G02B 5/26

(21) Numéro de dépôt : **90202672.3**

(22) Date de dépôt : **08.10.90**

(54) **Dispositif du type miroir dans le domaine des rayons X-UV.**

(30) Priorité : **13.10.89 FR 8913423**

(43) Date de publication de la demande :
**17.04.91 Bulletin 91/16**

(45) Mention de la délivrance du brevet :
**11.01.95 Bulletin 95/02**

(84) Etats contractants désignés :
**DE FR GB NL**

(56) Documents cités :
**EP-A- 0 128 026
US-A- 4 317 043
PATENT ABSTRACTS OF JAPAN, vol. 12, no.
93 (P-680)(2940), 26 mars 1988 ; &
JP-A-62226047
APPLIED OPTICS, vol. 16, no. 1, janvier 1977,
pages 89-93, New York, US ; A.V. VINOGRA-
DOV et al. : "X-ray and far uv multilayer
mirrors : principles and possibilities"**

(73) Titulaire : **LABORATOIRES D'ELECTRONIQUE
PHILIPS
22, avenue Descartes,
BP 15
F-94453 Limeil-Brévannes Cédex (FR)**
(84) **FR**
Titulaire : **Philips Electronics N.V.
Groenewoudseweg 1
NL-5621 BA Eindhoven (NL)**
(84) **DE GB NL**

(72) Inventeur : **Boher, Pierre
Société Civile S.P.I.D.,
156, Boulevard Haussmann
F-75008 Paris (FR)**
Inventeur : **Houdy, Philippe
Société Civile S.P.I.D.,
156, Boulevard Haussmann
F-75008 Paris (FR)**

(74) Mandataire : **Landousy, Christian et al
Société Civile S.P.I.D.
156, Boulevard Haussmann
F-75008 Paris (FR)**

## Description

L'invention concerne un dispositif du type miroir dans le domaine des rayons X-UV, comprenant l'empilement périodique sur un support d'undit système de couches superposées lequel inclut une couche inférieure d'un élément du tableau de Mendeleeff dont le numéro atomique Z est élevé, dit premier élément lourd, réfléchissant aux longueurs d'onde d'utilisation du miroir, et une couche supérieure d'un élément du tableau de Mendeleeff dont le numéro atomique Z est faible, dit élément léger espaceur, optiquement peu absorbant auxdites longueurs d'onde.

L'invention trouve par exemple son application dans la réalisation de spectroscopes, microscopes ou télescopes à rayons X, et tout appareil nécessitant la réalisation de miroirs à rayons X montrant des coefficients de réflexion aussi grands que possible, ou encore dans la réalisation de monochromateurs, lesquels nécessitent des miroirs qui montrent de surcroît une bonne sélectivité.

Une structure réfléchissante dans le domaine des rayons X est déjà connue de la demande de brevet européen EP-A- 0128026. Cette structure est formée de paires de couches métalliques et non métalliques. Elle peut inclure en outre une couche tampon disposée entre chaque couche de ces paires, et entre chaque paire, pour contrôler l'interaction des matériaux, c'est-à-dire pour prévenir l'interdiffusion et pour stabiliser cette structure. Cette couche-tampon ne doit pas avoir d'action sur le coefficient d'absorption de la structure. La couche tampon peut être favorablement formée de silicium ou bien de germanium ou encore de GeSi ou d'autres alliages capables de former une couche tampon inerte entre la couche métallique et la couche non métallique du bicouche. La couche métallique du bicouche est formée de l'un des éléments Hf, W, Re, Ta, Pt, Ir ou Au. La couche non métallique est formée soit de B, soit de $B_4C$.

Des miroirs pour le domaine des rayons X sont également connus de la publication intitulée "Interface analysis of sputtered W/C, Rh/C and Ni/C multilayers for soft X-ray applications" par P. BOHER, Ph. HOUDY, et Cl. SCHILLER dans "Thin Solid Films", 1989, p. 175.

Cette publication enseigne que pour réaliser des miroirs dans le domaine des rayons X, il est nécessaire de constituer des empilements périodiques de systèmes de deux couches, dont l'une est formée d'un élément léger peut absorbant et que l'on désigne généralement sous le nom d'espaceur, et dont l'autre est formée d'un élément lourd réfléchissant.

La publication citée enseigne que ces deux couches peuvent être choisies parmi les couples W-C, Rh-C, Ni-C, dans lesquels le carbone est l'élément espaceur, et le tungstène, rhodium ou nickel est l'élément lourd réfléchissant. Le couple W-C est celui qui, à ce jour, est le mieux connu.

L'épaisseur du système de deux couches, ou épaisseur d'une période, est de l'ordre de la longueur d'onde de fonctionnement, c'est-à-dire de quelques nm dans le domaine des rayons X.

Cette publication enseigne aussi que les deux paramètres qui influent le plus sur la réflectivité sont :
- la rugosité des interfaces des couches,
- la reproductibilité des épaisseurs.

Il est dit que la reproductibilité des épaisseurs est essentiellement un problème d'appareillage, alors que la rugosité des interfaces dépend des propriétés intrinsèques des matériaux choisis pour réaliser les couches.

Ainsi, selon cette publication, l'interface W-C présente une rugosité de l'ordre de 0,4nm, alors que l'interface C-W est quasi-parfaite.

Le cas du couple Rh-C est plus complexe. Il apparait que le rhodium pollue la couche de carbone par diffusion, alors que le carbone diminue la rugosité intrinsèque de la couche Rh. Il en résulte que l'interface C-Rh présente une épaisseur de l'ordre de 0,5nm, et est suivie d'une couche de rhodium pure.

Le cas du couple Ni-C est le plus complexe. Il apparaît une forte interdiffusion du nickel dans le carbone d'une part, et d'autre part l'interface C-Ni semble également contrôlée par l'interdiffusion du carbone dans le nickel même après une épaisseur de dépôt de 2nm.

Il est encore connu de réaliser des miroirs pour rayons X de la publication intitulée "The structure of ultrathin C/W and Si/W mutilayers for high performance in soft-X ray optics" par P. RUTERANA et alii dans "J. Appl. Phys". 65 (10) 15 May 1989 p.3907-3913.

Selon ce document, des miroirs pour le rayonnement X sont réalisés au moyen de multicouches formées du couple silicium-tungstène. Dans ce couple, le silicium est l'élément espaceur et le tungstène est l'élément lourd réfléchissant. Il est aussi enseigné que pour améliorer la réflectivité, il faut minimiser la rugosité d'interface. Les matériaux du couple sont choisis à cet effet en utilisant comme critère la coalescence. Une épaisseur de coalescence faible favorise l'obtention d'une rugosité d'interface minimale.

Or, il est connu de l'homme du métier que la longueur d'onde d'utilisation du miroir est liée au choix du couple élément espaceur-élément réfléchissant ; autrement dit, pour une application donnée, et une source de rayons X définie, la sélectivité et la réflectivité du miroir sont déterminées essentiellement par le choix des matériaux du bicouche.

2

Mais, d'autre part comme le montrent les documents cités, les matériaux qui constituent les meilleurs candidats pour réaliser un miroir à une longueur d'onde donnée, pour une application choisie, peuvent en réalité ne pas être appropriés à une mise en oeuvre industrielle satisfaisante, du fait qu'ils présentent des rugosités d'interface ou des défauts liés à l'interdiffusion.

Un but de la présente invention est de proposer un dispositif du type miroir tel que défini dans le préambule dont les caractéristiques techniques et dont les propriétés optiques sont améliorées par rapport à celles des dispositifs formés par l'empilement périodique d'un système bicouche.

Ainsi, un objet de l'invention est de proposer un dispositif dont la réflectivité est améliorée par rapport à celle des dispositifs connus.

Un autre objet de l'invention est de proposer un dispositif dans lequel la rugosité de surface ou l'interdiffusion sont réduites en sorte que ces défauts n'interdisent plus l'emploi des matériaux les mieux adaptés à la longueur d'onde de fonctionnement choisie.

Ces buts sont atteints au moyen du dispositif décrit dans le préambule de la revendication 1 et en outre caractérisé en ce que ledit système de couches superposées comprend, entre ladite couche inférieure et ladite couche supérieure, une couche intermédiaire d'undit second élément lourd réfléchissant aux longueurs d'onde d'utilisation pour former un système tricouche, et en ce que les premier et second éléments lourds des couches inférieure et intermédiaire forment respectivement avec l'élément léger espaceur de la couche supérieure un premier et un second couples tels

ce que le premier couple présente un contraste d'absorption plus élevé $\alpha_1 > \alpha_2$ et un rapport de contraste d'indices moins élevé $T_1 < T_2$ que le second couple,

- les contrastes d'absorption $\alpha_1$ et $\alpha_2$ des premier et deuxième couples étant définis à partir des parties imaginaires Im $\varepsilon_1$, Im $\varepsilon_2$ et Im $\varepsilon_3$ des susceptibilités électriques $\varepsilon_1$, $\varepsilon_2$ et $\varepsilon_3$ respectives du premier élément lourd, du deuxième élément lourd et de l'élément léger par les rapports :

$$\alpha_1 = \frac{Im\ \varepsilon_1}{Im\ \varepsilon_3} - I \qquad et\ \alpha_2 = \frac{Im\ \varepsilon_2}{Im\ \varepsilon_3} - 1$$

- et les rapports de contraste d'indices $T_1$ et $T_2$ des premier et deuxième couples étant définis à partir des parties imaginaires Im $\varepsilon_1$, Im $\varepsilon_2$ et Im $\varepsilon_3$ et des parties réelles Re $\varepsilon_1$, Re $\varepsilon_2$ et Re $\varepsilon_3$ de ces susceptibilités électriques par les rapports :

$$T_1 = \frac{Re\ (\varepsilon_1 - \varepsilon_3)}{Im\ (\varepsilon_1 - \varepsilon_3)}\ et\ T_2 = \frac{Re\ (\varepsilon_2 - \varepsilon_3)}{Im\ (\varepsilon_2 - \varepsilon_3)}$$

Dans ces conditions, la réflectivité du miroir est améliorée par rapport à ce que serait la réflectivité d'un miroir formé du même nombre de systèmes de couches, ces derniers étant constitués du meilleur des deux couples élément lourd - élément léger.

Dans une mise en oeuvre de l'invention, ce dispositif est caractérisé en ce que les éléments lourds et l'élément léger sont tels que les réflectivités potentielles desdits couples du système tricouche sont équivalentes.

Dans cette mise en oeuvre, la réflectivité du miroir est encore améliorée.

Dans une mise en oeuvre de l'invention, ce dispositif est caractérisé en ce que l'élément lourd de la couche intermédiaire est tel qu'il présente avec l'élément lourd de la couche inférieure et l'élément léger de la couche supérieure, la plus faible interdiffusion et une rugosité d'interface minimale.

Dans cette mise en oeuvre, les performances du miroir s'approchent au mieux des performances théoriques attendues.

L'invention sera mieux comprise au moyen de la description suivante illustrée par les figures schématiques annexées dont :

- la figure 1a représente l'empilement périodique sur un support, de n systèmes tricouches selon l'invention, formant un miroir pour rayonnement X-UV.
- la figure 1b représente le trajet des faisceaux lumineux dans un système tricouche.
- les figures 2a et 2b représentent respectivement les indices réels et imaginaires, en fonction de la longueur d'onde, des élément Rh en trait plein et C en traits discontinus.
- les figures 3a à 3c représentent respectivement les profils d'indice complexe dans chacun des couples et dans le système tricouche.
- la figure 4a représente les lignes d'isoréflectivité dans le plan $(\alpha,T)$ et la figure 4b, la position réelle dans ce plan de couples Me-carbone dont seul l'élément lourd Me est indiqué, l'élément léger étant toujours le carbone, à $\lambda = 4,47nm$.
- la figure 5a représente les réflectivités maximales $R_{max}$ de couples Me-C en fonction du numéro atomique Z de l'élément lourd Me.
- la figure 5b représente, en fonction de la longueur d'onde $\lambda$, la réflectivité maximale $R_{max}$ des couples Cr-C (courbe a), W-C (courbe b), Rh-C (courbe c).

- les figure 6a, 6b, 6c qui représentent dans le plan ($\alpha$, T) les courbes d'augmentation d'isoréflectivité de couples Me-carbone à $\lambda$ = 4,47nm.
- la figure 7a qui représente, en fonction de l'angle d'incidence $\theta$, la réflectivité R du couple W-C (courbe d), du couple Rh-C (courbe e) et du tricouche W/Rh/C dans cet ordre d'empilement (courbe f).
- la figure 7b qui représente respectivement, en fonction de la longueur d'onde A, la réflectivité maximale $R_{max}$ des mêmes systèmes (courbes d', e', et f').
- la figure 7c qui représente d'une part la réflectivité maximale du système tricouche W/Rh/C empilé dans cet ordre (courbe f') et d'autre part la réflectivité maximale du système tricouche Rh/W/C empilé dans cet ordre (courbe f''), en fonction de la longueur d'onde $\lambda$.
- les figures 8a et 8b qui représentent la variation d'énergie E, en fonction de l'épaisseur z dans des empilements de systèmes bicouches respectivement W-C et Rh-C, ainsi que les rapports d'indice réel des matériaux.
- la figure 8c qui représente superposés, les profils d'indice réels d'un système tricouche empilé dans le sens favorable, et les variations de l'énergie dans ce système, en fonction de l'épaisseur z traversée par la lumière.
- la figure 8d qui représentent les courbes des mêmes variables, lorsque les matériaux du système tricouche sont empilés dans un sens défavorable.

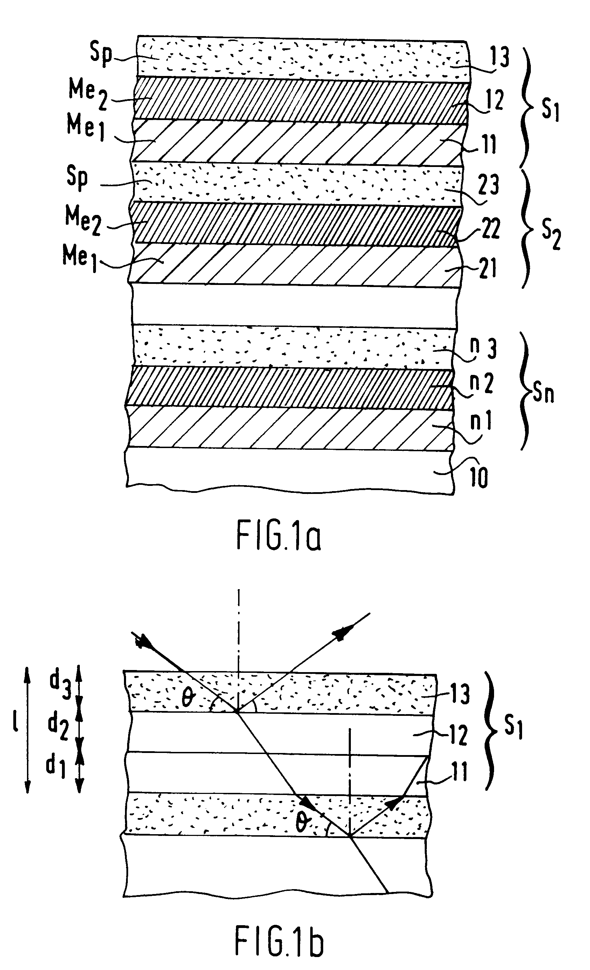

Tel que représenté sur la fig.1a un miroir fonctionnant dans le domaine des rayons X-UV par exemple entre 1 et 20nm, est formé d'un empilement périodique de dits systèmes de couches, $S_1$, $S_2$,...$S_n$.

Chaque système de couches, par exemple $S_1$, comprend, comme montré sur la figure 1b, une couche inférieure 11, d'épaisseur $d_1$ en un premier matériau lourd, qui présente une haute densité en électrons, réfléchissant dans le domaine de longueur d'onde $\lambda$ d'utilisation du miroir, une couche intermédiaire 12, d'épaisseur $d_2$ en un second matériau lourd également réfléchissant dans ce domaine de longueur d'onde $\lambda$, et une couche supérieure 13 d'épaisseur $d_3$, en un matériau léger désigné sous le nom d'espaceur.

La susceptibilité diélectrique $\varepsilon$ d'un matériau s'exprime de façon connue de l'homme du métier par la relation (1) :

$$\varepsilon = 1 - \delta - i\beta \quad (1)$$

où $\delta$ et $\beta$ sont respectivement les indices réel et complexe du matériau.

Or dans le domaine des X-UV, les indices $\delta$ et $\beta$ sont à peu de chose près proportionnels au numéro atomique Z de l'élément formant le matériau d'une couche, ceci en dehors des régions de singularité, où par exemple dans le cas du carbone, on constate un défaut d'absorption correspondant à la raie K$\alpha$, à la longueur d'onde $\lambda$ = 4,47nm.

On entend alors par matériaux lourds, les matériaux formés d'un élément dont le numéro atomique Z est élevé dans le tableau de Mendeleieff, et par matériaux légers, les matériaux formés d'un élément dont le numéro atomique Z est faible. Les matériaux légers se trouveront notamment dans les deux premières colonnes du tableau de Mendeleieff et les matériaux lourds dans les autres colonnes. Pour les matériaux légers les indices $\delta$ et $\beta$ de la relation (1) ont des valeurs faibles.

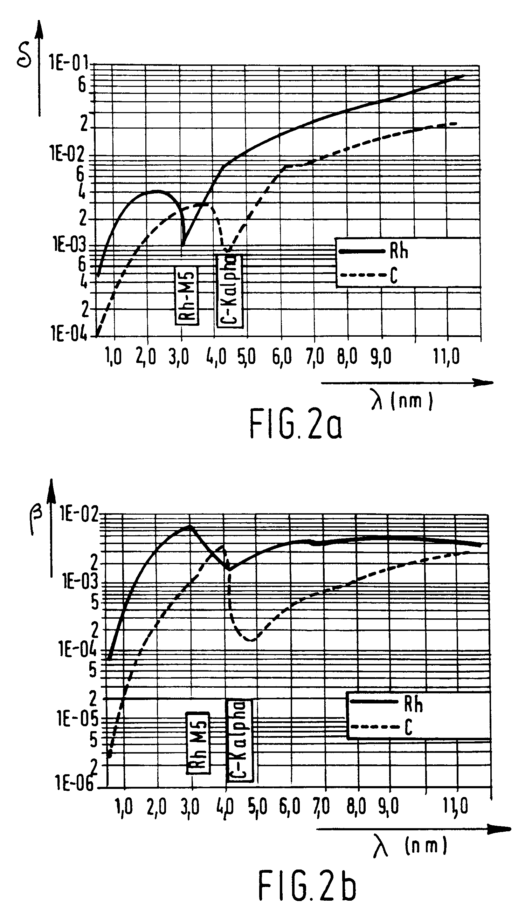

A titre d'exemple, on a représenté sur la fig.2a, l'indice réel $\delta$, respectivement du carbone en trait discontinu, et du rhodium en trait continu ; et sur la figure 2b, l'indice complexe $\beta$ respectivement du carbone en trait discontinu, et du rhodium en trait continu.

Ce système de couches présente une épaisseur $\ell$

$$\ell = d_1 + d_2 + d_3 \quad (1)$$

qui est l'épaisseur de la période d'empilement du système $S_1$...$S_n$ de couches pour réaliser le miroir, et qui est de l'ordre de la longueur d'onde d'utilisation, ceci dans le but de pouvoir utiliser ce miroir sous des incidences non-rasantes. Cette condition impose des épaisseurs très faibles, de l'ordre de quelques nanomètres pour des longueurs d'onde d'utilisation $\lambda$ situées dans le domaine de 1 à 100nm.

Les sources qui nécessitent des miroirs travaillant dans ce domaine de longueur d'onde sont des nouvelles sources de rayonnement X-UV (comme les synchrotrons, anneaux de stockage...). Les différents domaines d'applications sont, par exemple, la spectroscopie, la lithographie à rayons X, les télescopes à rayons X etc, qui nécessitent des miroirs à fort coefficient de réflexion.

Comme on l'a vu précédemment la réflectivité et la sélectivité des miroirs dépendent d'un certain nombre de paramètres parmi lesquels on compte : le choix des matériaux, la régularité en épaisseur tout au long de l'empilement, la rugosité des couches aux interfaces, et la pureté des matériaux.

Il apparaissait dans l'art antérieur que le système bicouche W-C pouvait avoir une application industrielle intéressante, parce qu'étant facile à réaliser avec une faible rugosité d'interface et une faible interdiffusion. Mais ce système bicouche W-C est limité au domaine de longueur d'onde situé autour de 4,4nm avec une très faible bande passante et une réflectivité théorique de l'ordre de 44% (voir le tableau I).

Or, en pratique, l'homme du métier sait que les réflectivités réellement obtenues sont de l'ordre de la moitié des réflectivités théoriques dont la valeur est donnée par le calcul.

C'est pourquoi le système tricouche selon l'invention apporte de grands avantages dans la réalisation des miroirs X-UV. Il permet :

- d'une part de choisir les matériaux qui résultent en une augmentation de la réflectivité théorique, et donc une augmentation de la réflectivité réellement obtenue,
- d'autre part d'introduire un matériau parmi ceux qui présentent une faible interdiffusion et une faible rugosité aux interfaces, ce qui diminue l'écart entre la valeur réelle et la valeur théorique de la réflectivité et donc augmente la réflectivité réellement obtenue.

En effet, l'augmentation du nombre des paramètres liés à la réalisation des miroirs à systèmes tricouches, permet une plus grande liberté dans le choix des matériaux et évite à l'homme du métier de se trouver acculé à utiliser pour réaliser des miroirs à systèmes bicouches comme connus soit deux matériaux compatibles technologiquement mais formant un bicouche à faible réflectivité théorique, soit deux matériaux à forte réflectivité théorique mais formant un bicouche technologiquement défavorable.

Le tableau I donne, à la longueur d'onde $\lambda$ = 4,47nm, correspondant à la raie d'émission $K\alpha$ du carbone, les caractéristiques liées à différents systèmes bicouches. Dans ce tableau $\beta$ est l'indice complexe défini par la relation (1) ;

$R_{max}$ est la réflectivité théorique maximale que l'on peut attendre d'un couple de matériaux donnés, tels que décrit dans l'état de la technique, c'est-à-dire comprenant une couche inférieure en un matériau lourd, et une couche supérieure formée de carbone comme espaceur ; $N_{opt}$ est le nombre optimal théorique de couches pour obtenir $R_{max}$ sous incidence normale.

On va montrer ci-après comment choisir les matériaux et comment disposer les couches dans le système tricouche pour obtenir une meilleure réflectivité, une quantité de lumière intégrée plus grande, et une plus grande facilité d'exécution des miroirs que selon l'art antérieur.

Il est connu d'une première publication par A.V. Vinogradov et B.Y Zeldovich, dans Applied Optics, Vol. 16, N.1, 89 (1977), des moyens mathématiques pour résoudre l'équation de propagation dans une structure à profil d'indices périodiques, moyens qui permettent, en faisant des hypothèses simplificatrices, d'obtenir une expression littérale de la réflectivité d'un miroir tel que déjà connu de l'état de la technique, c'est-à-dire à systèmes bicouches périodiques, ceci en fonction des paramètres dudit miroir à savoir la période, le rapport d'épaisseur des deux matériaux, et le nombre de périodes des systèmes bicouches, et dans les conditions d'incidence normale.

Il est connu d'une seconde publication des mêmes auteurs, dans "Optic. Spectrose" Vol.42, n°4, April 1977, p.404-407 des moyens mathématiques identiques pour résoudre les mêmes équations dans les conditions où l'incidence n'est plus normale mais oblique. La structure des miroirs inclut, de même que précédemment des systèmes bicouches, mais du fait de l'incidence oblique, le nombre total de couches nécessaires est réduit par un facteur $Cos^2\theta$, où $\theta$ est l'angle d'incidence. La réflectivité maximale est la même que dans le cas de l'incidence normale.

Ce type de calculs permet de déterminer, en une seule étape et a priori, les paramètres du système qui conduisent aux performances théoriques voulues pour le miroir (réflectivité, sélectivité) ; ceci constitue un progrès sur le type de calculs dits interférentiels, par ailleurs partie des connaissances générales de l'homme du métier, au moyen desquels il était seulement permis de constater a postériori le degré de performances théoriques d'un miroir dont les paramètres étaient choisis empiriquement et qui ne pouvait être amélioré qu'en plusieurs étapes par approximations successives.

On notera d'abord que, dans la gamme des rayons X-UV, par exemple pour des longueurs d'onde $\lambda$ comprises entre 1mn et 20nm, tous les matériaux ont une susceptibilité diélectrique, notée $\varepsilon$ liée par la relation (3)

$$|\varepsilon^{-1}| \ll 1 \ (3).$$

La réflectivité d'un matériau massif est donc très faible, c'est-à-dire de l'ordre de $10^{-4}$, en dehors des incidences très rasantes. C'est pourquoi, il est indispensable de réaliser les miroirs utilisés dans le domaine de longueur d'onde au moyen de systèmes multicouches, afin de pouvoir travailler à des incidences non rasantes. Un miroir multicouche à systèmes bicouches, permet déjà d'obtenir un gain de réflectivité d'environ $10^3$ par rapport à un miroir constitué d'un matériau massif. On va chercher, selon l'invention, à optimiser ces performances.

On notera ensuite que la susceptibilité diélectrique $\varepsilon(Z)$ est périodique dans la direction Z perpendiculaire aux couches.

Dans ce qui suit, on notera :

Im pour "partie imaginaire de"

$R_e$ pour "partie réelle de"

B et C les rapports d'épaisseur $d_1$, $d_2$, $d_3$ des matériaux 11, 12, 13, définis par les relations (4) et (5).

$$B = \frac{d_1}{d_1 + d_2 + d_3} = \frac{d_1}{\ell} \quad (4)$$

$$C = \frac{d_2}{d_1 + d_2 + d_3} = \frac{d_2}{\ell} \quad (5)$$

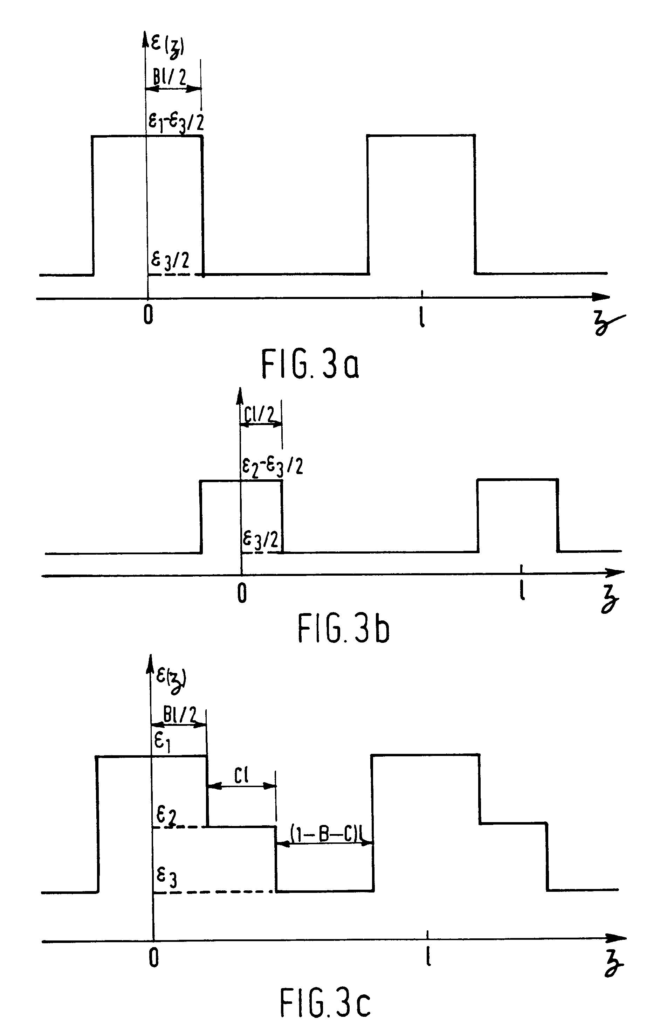

Dans le cas du miroir formé de l'empilement périodique de systèmes tricouches selon l'invention, le profil d'indice complexe est représenté par la figure 3c.

Physiquement, dans le cas d'un système à trois matériaux, la dépendance en Z de la susceptibilité diélectrique peut être représentée comme la somme de deux dépendances reportées sur les figures 3a et 3b. Le profil de la figure 3c est alors la somme des profils des figures 3a et 3b. On se place dans le cas où les matériaux des couches 1 et 2 sont lourds, le matériau de la couche 3 est léger et où les relation (6) et (7) sont vérifiées :

$$\operatorname{Im} \varepsilon_1 > \operatorname{Im} \varepsilon_3 \quad (6)$$
$$\operatorname{Im} \varepsilon_2 > \operatorname{Im} \varepsilon_3 \quad (7)$$

relations dans lesquelles :

$\varepsilon_1$, $\varepsilon_2$, $\varepsilon_3$ sont les susceptibilités diélectriques respectives des matériaux des couches 11, 12 et 13.

On notera que dans le cas traité par les publications de Vinogradof les calculs sont menés sur des systèmes bicouches donc symétriques.

Selon l'invention les calculs sont menés sur des systèmes tricouches, complètement dissymétriques, donc mathématiquement plus difficiles à étudier.

Un programme de simulation numérique a donc été utilisé pour calculer la réflectivité théorique d'un miroir composé de système tricouches.

Dans le cas le plus général, les matériaux du système tricouche peuvent être caractérisés par deux contrastes d'absorption $\alpha_1$ et $\alpha_2$ donnés par les relations (8) et (9).

$$\alpha_1 = \frac{\operatorname{Im}\varepsilon_1}{\operatorname{Im}\varepsilon_3} - 1 \quad (8) \; ; \; \alpha_2 = \frac{\operatorname{Im}\varepsilon_2}{\operatorname{Im}\varepsilon_3} - 1 \quad (9)$$

et par deux rapports de contraste d'indices réels et imaginaires $T_1$ et $T_2$ donnés par :

$$T_1 = \frac{\operatorname{Re}(\varepsilon_1 - \varepsilon_3)}{\operatorname{Im}(\varepsilon_1 - \varepsilon_3)} \quad (10) \; ; \; T_2 = \frac{\operatorname{Re}(\varepsilon_2 - \varepsilon_3)}{\operatorname{Im}(\varepsilon_2 - \varepsilon_3)} \quad (11)$$

Pour atteindre les buts de l'invention, on a réalisé l'étude des performances théoriques que l'on peut attendre d'un système tricouche en fixant un couple ($\alpha_1$, $T_1$) et en faisant varier l'autre couple ($\alpha_2$, $T_2$). Il est alors apparu qu'il existait des cas où la réflectivité maximale théorique du système tricouche formé de deux couches superposées de matériaux lourds surmontées d'un espaceur, était améliorée par rapport à celle du meilleur des systèmes bicouches formé d'un des deux matériaux lourds et du même espaceur.

On va montrer ci-après comment sélectionner les matériaux et comment les disposer pour obtenir cette amélioration de la réflectivité.

Le procédé pour opérer cette sélection comprend la série d'étapes suivantes :

a) on établit dans le plan ($\alpha$, T) des courbes d'isoréflectivité maximale théoriques c'est-à-dire des courbes le long desquelles la réflectivité R est à la fois maximale ($R_{max}$) et identique pour des couples de matériau lourd (Me)-matériau léger (Sp) considérés comme formant des bicouches Me-Sp.

D'une façon générale, ces courbes ne dépendent ni de la longueur d'onde, ni du matériaux espaceur 13.

Cependant, pour chaque longueur d'onde d'utilisation choisie, l'homme du métier recherchera d'abord le matériau léger pour constituer la couche supérieure 13 ou espaceur du système tricouche. Cette couche doit être réalisée au moyen d'un élément du tableau de Mendeleieff qui présente un minimum d'absorption pour la longueur d'onde donnée.

Ainsi par exemple, l'homme du métier sait que (voir les figures 2a et 2b) à la longueur d'onde $\lambda = 4,47\,nm$ qui correspond à la raie K$\alpha$ d'émission du carbone, on observe une diminution brutale de l'absorption du carbone : à cette longueur d'onde, les indices $\beta$ et $\delta$ sont faibles.

Dans un autre exemple, à la longueur d'onde $\lambda = 6,67\,nm$ qui correspond à la raie K$\alpha$ du bore, on choisira de préférence un espaceur qui comportera du bore, comme par exemple le carbure de bore $B_4C$ et qui présentera un minimum d'absorption à cette longueur d'onde.

D'après ce qui précède, il est donc particulièrement favorable de choisir le carbone comme matériau espaceur ou couche 13 du système tricouche lorsque la longueur d'onde d'utilisation choisie pour le miroir est $\lambda = 4,47\,nm$. Les caractéristiques pour réaliser les courbes d'isoréflectivité maximale prévue à cette étape a), à la longueur d'onde $\lambda = 4,47\,nm$, avec le carbone comme élément espaceur sont données dans le tableau I.

Pour tracer ces courbes, on prend en compte que les indices d'un couple de matériaux Me-Sp donné déterminent complètement un point dans le plan ($\alpha$, T) et donc la réflectivité $R_{max}$ réalisable au moyen de ce couple de matériaux.

La figure 4a représente ces courbes d'isoréflectivité maximale $R_{max}$, le contraste d'absorption $\alpha$ étant porté en abscisse et le rapport de contraste d'indices T étant porté en ordonnée. Ces couches sont tracées avec un incrément de 5%. Elles montrent que les réflectivités maximales sont obtenues lorsque le couple Me-Sp présente à la fois un fort rapport de contraste d'indice T et un faible contraste d'absorption $\alpha$. Elles montrent aussi que la même réflectivité (par exemple 50%) peut être obtenue si le couple Me-Sp présente un faible rapport de contraste d'indice T et un fort contraste d'absorption $\alpha$. Le premier cas est par exemple concrétisé par le point $M_2$ de la figure 4a, et le second cas par le point $M_1$ de cette même figure. Le point $M_3$, également sur la courbe d'isoréflectivité 50%, correspond à des valeurs intermédiaires de $\alpha$ et T.

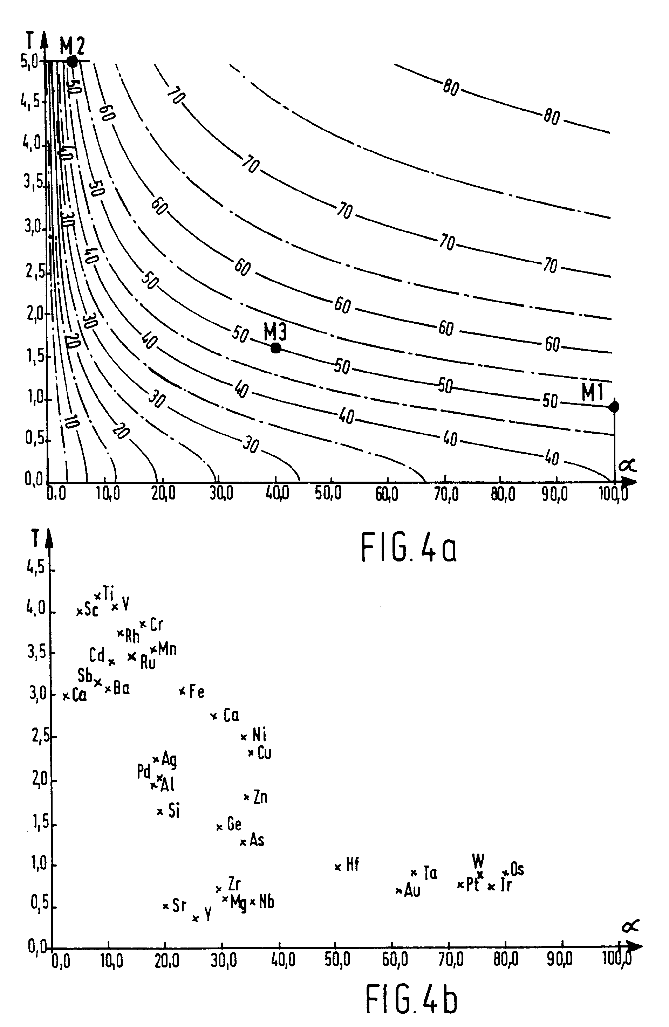

La figure 4b montre la position dans le plan ($\alpha$, T) de quelques couples réels Me-Sp où l'espaceur est le carbone, et pour la longueur d'onde de la raie K$\alpha$ du carbone.

On constate, à la vue de cette figure 4b qu'il existe, à cette longueur d'onde et dans les conditions citées, trois grands domaines permettant de réaliser la sélection du matériau lourd associé au carbone pour obtenir une réflectivité maximale.

- un premier domaine où :

  T faible

  $\alpha$ fort

et qui comprend notamment les couples Me-carbone où le matériau lourd est entre autres : le tungstène (W), l'osmium (Os), le platine (Pt), c'est-à-dire les matériaux lourds à numéro atomique les plus élevés ;

- un second domaine où :

  T fort

  $\alpha$ faible

et qui comprend notamment les couples Me-carbone où Me est entre autres : le thallium (Tl), le rhodium (Rh), le chrome (Cr) ;

- un troisième domaine où

  T et $\alpha$ ont des valeurs moyennes correspondant à Me choisi parmi entre autres le nickel (Ni), le cobalt (Co) etc...

En superposant les figures 4a et 4b, qui sont établies à cet effet à la même échelle, on obtient la réflectivité maximale que l'on peut attendre en utilisant un système bicouche Me-Sp pour former le miroir multicouche, avec le matériau indiqué sur la figure 4b comme couche inférieure et le carbone comme espaceur, à $\lambda = 4,47nm$.

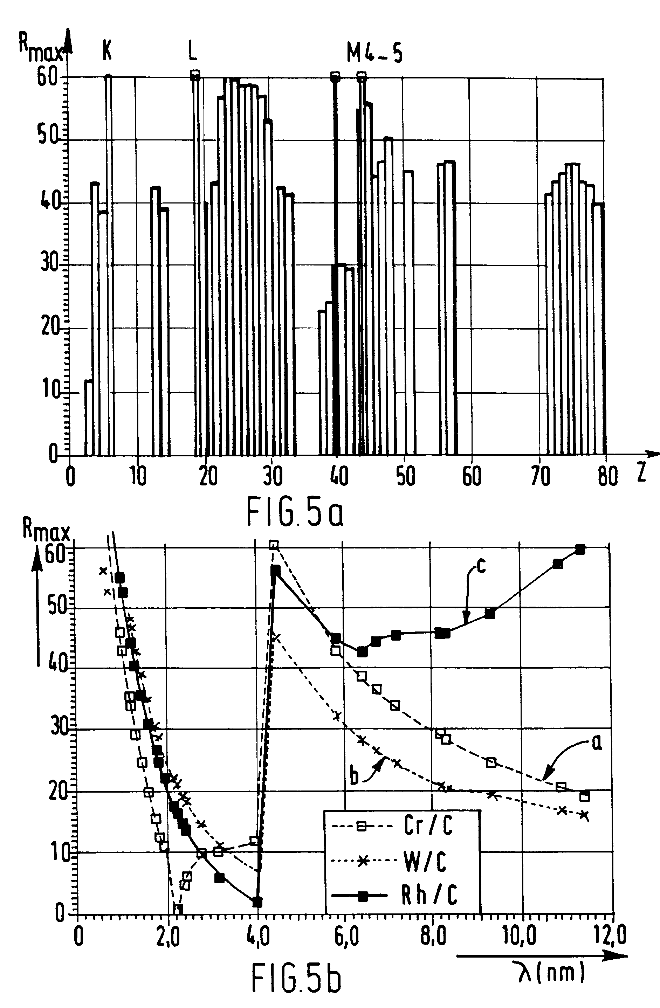

La distribution de réflectivité maximale $R_{max}$ réalisable à une longueur d'onde donnée, avec un matériau d'un certain numéro atomique et un espaceur fixé, ne se fait pas au hasard. Elle dépend en fait directement de la position de l'élément lourd Me vis-à-vis du seuil d'émission le plus proche. Ceci sera mieux compris, en considérant la figure 5a qui montre la réflectivité maximale $R_{max}$ réalisable en fonction du numéro atomique Z du matériau lourd Me associé à l'espaceur Sp carbone dans le cas du système bicouche Me-Sp à $\lambda = 4,47nm$. La figure 5a indique aussi les différents seuils d'absorption desdits éléments (K, L, M, N..). On constate que les matériaux Me qui fournissent les plus fortes réflectivités sont toujours situés "au-dessus" des seuils (K, L, M...) avec un décalage de quelques cases dans le tableau de Mendeleieff.

On interprètera ces résultats en considérant le cas concret du couple Rh-C (où Rh est le matériau lourd Me, et où C est le matériau léger espaceur Sp), au moyen des courbes des figures 2a et 2b qui représentent les indices réels et imaginaires respectivement $\delta$ et $\beta$ du rhodium (Rh) et du carbone (C) en fonction de la longueur d'onde $\lambda$. D'après la relations (1) donnée précédemment, on rappelle que :

$$1 - \delta = \text{Re } \varepsilon \quad (12)$$
$$\beta = \text{Im } \varepsilon \quad (13)$$

Sur les figures 2a et 2b, on a aussi indiqué les niveaux M5 du rhodium et K$\alpha$ du carbone. Exactement au niveau M5 (situé à $\lambda = 3.0nm$) et juste au-dessus, l'absorption du rhodium est notablement affaiblie du fait de la transition, alors que son indice augmente brutalement. L'absorption $\alpha$ du rhodium à $\lambda = 4.47nm$ est donc relativement faible, et son contraste d'indice T relativement grand ($T \approx 3,69$), ce qui conduit une réflectivité potentielle $R_{max}$ de 55,8% pour le couple Rh-C (Tableau I, figures 4a et 4b).

Dans cette étape a) on réalise l'étude décrite ci-dessus pour éventuellement d'autres couples Me-Sp à d'autres longueurs d'onde $\lambda$ dans le domaine X-UV, puis on procède selon l'étape suivante :

b) on établit l'augmentation de réflectivité maximale réalisable en réalisant l'empilement de deux matériaux lourds, un premier matériau lourd $Me_1$ pour la couche 11, un second matériau lourd $Me_2$ pour la couche 12, et un matériau léger espaceur Sp pour la couche 13 formant le système tricouche selon l'invention.

Chaque matériau lourd, $Me_1$, $Me_2$ forme avec l'espaceur Sp un couple :

  $Me_1$ - Sp

  $Me_2$ - Sp

déjà étudié au cours de l'étape a), et qui peut être repéré par un point sur les courbes d'isoréflectivité de la figure 4a.

A chaque couple Me-Sp correspond un couple ($\alpha$, T). Ainsi à

(Me$_1$ - SP) correspond ($\alpha_1$, T$_1$)

(Me$_2$ - SP) correspond ($\alpha_2$, T$_2$)

La détermination de l'augmentation de réflectivité est faite en utilisant d'une part les relations (8) et (9) donnant $\alpha_1$ et $\alpha_2$, et d'autre part les relations (10) et (11) donnant T$_1$ et T$_2$.

Puis on fixe une valeur ($\alpha_1$, T$_1$) correspondant à un premier couple Me$_1$-Sp et l'on fait varier les valeurs ($\alpha_2$, T$_2$) correspondant aux seconds couples possibles Me$_2$-Sp, dans le même domaine ($\alpha$, T) c'est-à-dire

$$0 \leqq \alpha \leqq 100$$
$$0 \leqq T \leqq 5$$

Pour mieux faire comprendre cette seconde étape du procéde de sélection des matériaux, on décrit ci-après trois exemples :

EXEMPLE 1

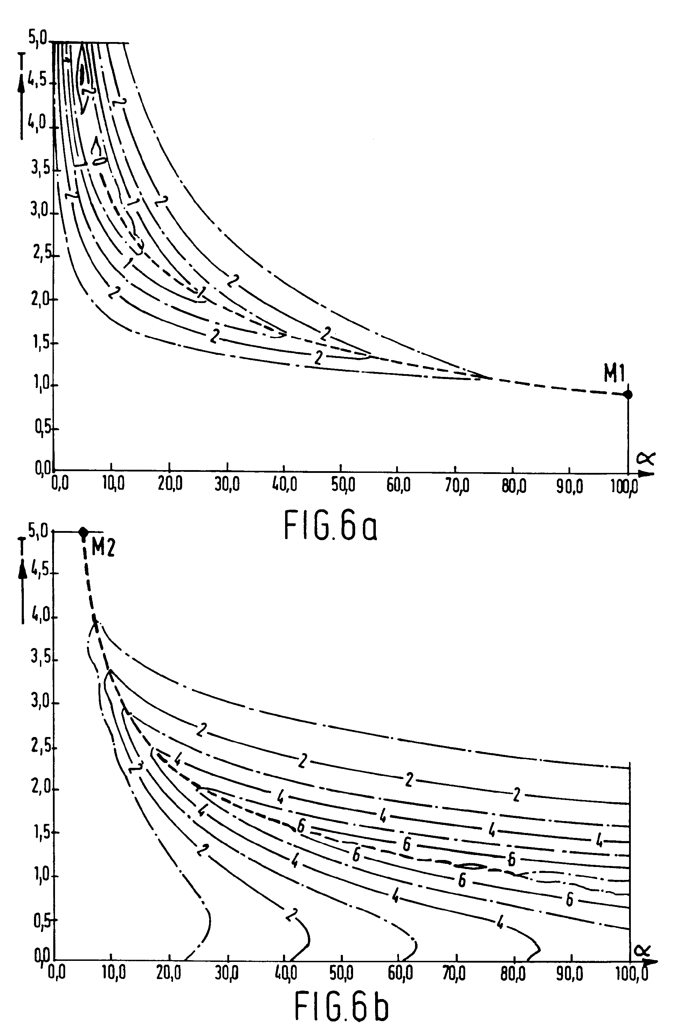

Cet exemple est illustré par la figure 6a, on choisit desdits premiers couples de matériaux respectivement lourds et légers Me$_1$-Sp dont les paramètres ($\alpha_1$,T$_1$) seront fixés de manière à être concrétisés par des points proches du point M$_1$ de la figure 4a. Comme on l'a dit précédemment, c'est le cas des couples tels que

W-C Pt-C

OS-C Au-C

Ir-C à $\lambda$ = 4,47nm.

Le point M$_1$ de cet exemple est sur la ligne d'isoréflectivité 50% avec :

$\alpha_1$ fort

T$_1$ faible

Dans ces conditions, un point ($\alpha_2$, T$_2$) du plan, correspondant à desdits seconds couples Me$_2$-Sp de matériaux, fixe complètement les valeurs d'indices du système tricouche. Cette représentation permet de mettre en évidence les zones ($\alpha_2$, T$_2$) du plan qui conduisent à une augmentation de réflectivité par rapport au cas où l'on n'utiliserait qu'un système bicouche composé des matériaux Me$_1$-Sp caractérisés par ($\alpha_1$, T$_1$) et représentés par les points proches de M$_1$.

On a représenté sur la figure 6a, des lignes d'augmentation d'isoréflectivité par rapport à la ligne d'isoréflectivité 50%, en considérant cette réflectivité comme la réflectivité maximale avec le meilleur des cas à deux matériaux. Cette représentation est faite avec un incrément de 1% par rapport à 50%, c'est-à-dire 2% par rapport à 100% de réflectivité maximale.

On constate qu'il existe un grand domaine où l'on observe une notable augmentation de la réflectivité, augmentation qui peut atteindre 6%, dans cet exemple précis par rapport à 50%, c'est-à-dire une augmentation relative de 12%.

Cette augmentation se produit pour des couples ($\alpha_2$, T$_2$) correspondant à des points "éloignés" du point M$_1$ et relativement proches de la ligne d'isoréflectivité 50% sur laquelle se trouve le point M$_1$.

Ainsi on obtient l'augmentation de réflectivité la plus élevée lorsque sont remplies les conditions suivantes :

- le matériau lourd Me$_1$ pour former la couche inférieur 11 du tricouche présente :

$\alpha_1$ fort

T$_1$ faible

- le matériau lourd Me$_2$ pour former la couche suivante 12 du tricouche, ou couche intermédiaire présente :

$\alpha_2 < \alpha_1$

T$_2 > $ T$_1$

- en outre les trois matériaux Me$_1$, Me$_2$, Sp présentent des réflectivités potentielles voisines.

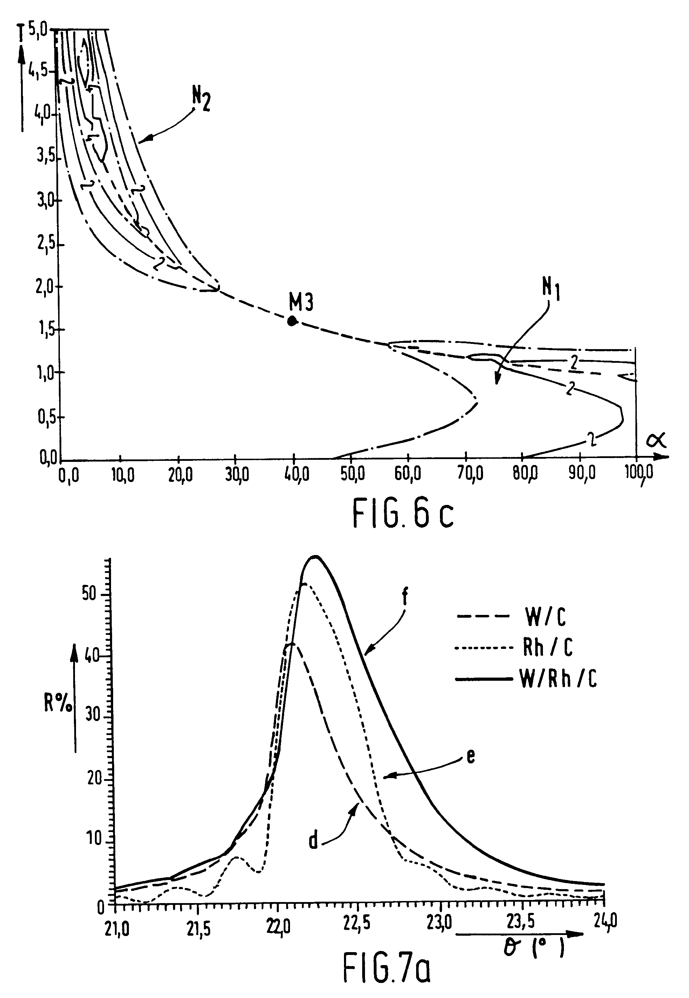

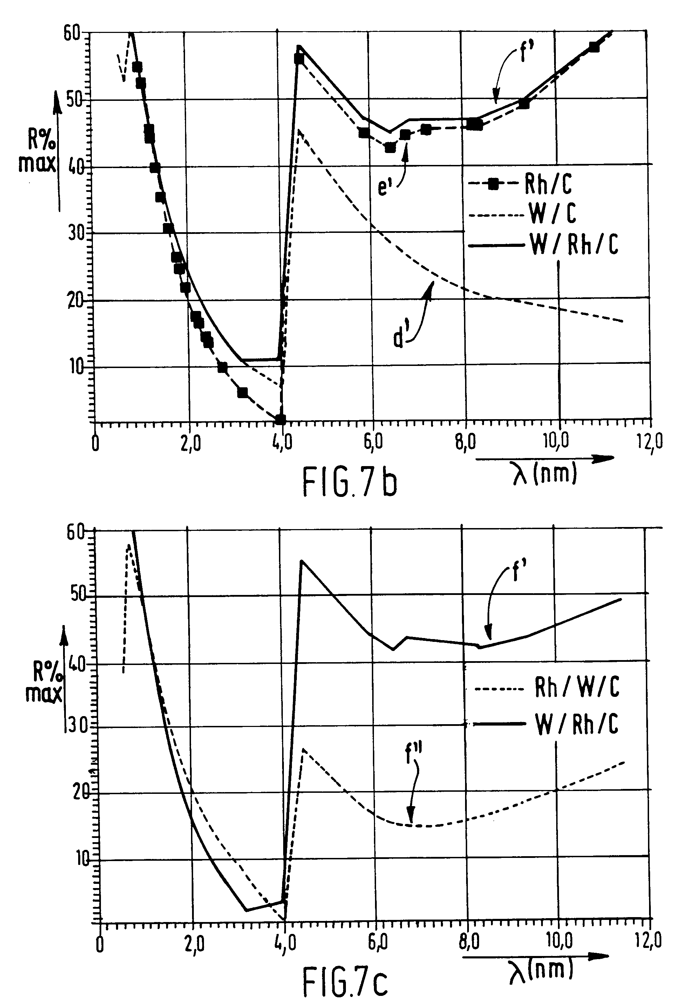

Donc le sens d'empilement des couches est un facteur très important. Des expériences ont été menées en choisissant un système tricouche

W/Rh/C

qui répond à ces conditions. L'augmentation de réflectivité escomptée a été obtenue comme il est montré sur les figures 7a et 7b. Puis des expérimentations ont été menées en inversant l'empilement des couches, c'est-à-dire en réalisant le matériau Me$_1$ sur le matériau lourd Me$_2$, l'espaceur Sp (ici le carbone) formant toujours la couche supérieure, c'est-à-dire l'empilement Rh/W/C : on a alors trouvé une diminution de la réflectivité, comme il est montré sur la figure 7c.

Dans l'exemple de l'empilement W/Rh/C

La réflectivité max de W/C était R$_{max}$ = 44,71 (Tableau I).

La réflectivité max de Rh/C était R$_{max}$ = 55,81 (Tableau I).

La réflectivité maximale théorique sera R$_{max}$ = 57.80 (Tableau II)

Dans les conditions de cet exemple I, on peut aussi citer les bonnes performances que l'on peut attendre de l'empilement

Os/Sb/C

(où Os est $Me_1$, Sb est $Me_2$ et C est l'espaceur Sp)

Pour le couple Os-C, on a $\alpha_1 = 80$, $T_1 = 0,88$, $R_{max} = 46,2\%$

Pour le couple Sb-C, on a $\alpha_2 = 1$, $T_2 = 3$, $R_{max} = 44,9\%$

et pour l'empilement Os/Sb/C dans cet ordre

$R_{max} = 52,2\%$

soit une amélioration de la réflectivité de 12,5% par rapport au meilleur des deux couples.

## EXEMPLE 2

Cet exemple est illustré par la figure 6b. On choisit desdits seconds couples de matériaux respectivement lourds et légers $Me_2$ - Sp dont les paramètres ($\alpha_2$, $T_2$) sont fixés de manière à être concrétisés par des points proches du point $M_2$ de la figure 4a. Comme on l'a dit précédemment, c'est le cas de couples tels que :

Ti - C        Rh - C

Cr - C        Mn - C

à $\lambda = 4,47nm$.

Le point $M_2$ est sur la ligne d'isoréflectivité 50% avec, d'une façon générale.

$T_2$ fort

$\alpha_2$ faible

Pour fixer les valeurs d'indices du système tricouche, il faut cette fois déterminer des points ($\alpha_1$, $T_1$) du plan, correspondant à desdits premiers couples $Me_1$-Sp de matériaux qui conduisent à une augmentation de réflectivité par rapport au cas où l'on n'utiliserait que le système bicouche $Me_2$-Sp.

On a représenté sur la figure 6b des lignes d'augmentation d'isoréflectivité par rapport à la ligne d'isoréflectivité 50% considérant le meilleur des cas à 2 matériaux. Cette représentation est faite comme sur la figure 6a avec un incrément de 1% par rapport à 50%.

Il existe dans ce cas aussi un grand domaine où l'on observe une augmentation de réflectivité. Cette augmentation se produit pour des couples ($\alpha_1$, $T_1$) "éloignés" du point $M_2$ et relativement proche de la ligne d'isoréflectivité 50% sur laquelle se trouve $M_2$.

On observe comme précédemment une augmentation de réflectivité lorsque l'on forme un tricouche en empilant deux matériaux lourds $Me_1$, $Me_2$ successivement, surmontés d'un espaceur Sp qui est le carbone dans le cas de la figure 6b, tels que :

$\alpha_2 < \alpha_1$

$T_2 > T_1$

et tels que les trois matériaux présentent des réflectivités potentielles voisines.

## EXEMPLE III

Cet exemple est illustré par la figure 6c. Dans un premier cas on peut choisir de fixer le matériau lourd $Me_2$ de la couche intermédiaire 12 formant avec le carbone C un couple de caractéristique intermédiaires ($\alpha_2$, $T_2$) représentées par le point $M_3$ sur la ligne d'isoréflectivité 50%, on obtiendra l'augmentation de réflectivité recherchée en choisissant le matériau lourd $Me_1$ pour réaliser la première couche du tricouche parmi ceux qui forment avec le carbone des couples dont les caractéristiques ($\alpha_1$, $T_1$) se trouvent dans la région $N_1$ avec

$\alpha_2 < \alpha_1$

$T_2 > T_1$

Dans un second cas on peut choisir de fixer le matériau lourd $Me_1$ de la couche inférieure 11 du tricouche pour former avec le carbone C un couple de caractéristiques intermédiaires ($\alpha_1$, $T_1$) représentées par le point $M_3$ sur la ligne d'isoréflectivité 50%. On obtiendra l'augmentation de réflectivité recherchée en choisissant le matériau lourd $Me_2$ pour réaliser la couche intermédiaire 12, parmi ceux qui forment avec le carbone des couples dont les caractéristiques ($\alpha_2$, $T_2$) se trouvent dans la région $N_2$ avec toujours

$\alpha_2 < \alpha_1$

$T_2 > T_1$

Les meilleurs résultats sont obtenus lorsque les points ($\alpha_1$, $T_1$) et ($\alpha_2$, $T_2$) sont au voisinage de la même ligne d'isoréflectivité.

On peut refaire ces courbes des figures 4a, 4b, 6a, 6b, 6c avec d'autres couples, notamment comprenant un autre espaceur Sp, et à une autre longueur d'onde X-UV. Les résultats théoriques restent en concordance avec les résultats présentés ci-dessus et les mises en oeuvre pratiques suivent les résultats théoriques es-

9

comptés, en restant cependant toujours un peu en deça, si les matériaux choisis présentent une interdiffusion ou des interfaces épaisses.

Selon l'invention, pour augmenter la réflectivité, on pourra alors choisir parmi plusieurs candidats possibles pour l'un ou l'autre des matériaux lourds $Me_1$, $Me_2$ celui ou ceux qui sont dans les domaines conseillés pour obtenir l'augmentation théorique de réflectivité et qui de plus dans la pratique sont technologiquement plus compatibles, présentent moins d'interdiffusion, des interfaces de meilleure qualité ou sont tout simplement plus faciles à utiliser pour réaliser des couches d'épaisseur donnée rigoureuse et répétitive.

EXEMPLE IV

Dans l'hypothèse où le carbone est le matériau espaceur Sp et la longueur d'onde $\lambda$ = 4,47nm, on a pu constater en superposant les figures 4a et 4b que le meilleur candidat à cette longueur d'onde était le couple Cr-C, avec

$\alpha \simeq 16$
$T \simeq 3,8$
$R_{max}$ = 60,41% théoriquement.

Cependant les résultats obtenus pratiquement sont toujours inférieurs.

Pour améliorer ces résultats, d'après l'enseignement de l'invention, on pourra former, pour réaliser des miroirs multicouches X-UV, des systèmes tels que ceux qui sont donnés à titre d'exemple dans le tableau III.

EXEMPLE V

Un autre bon candidat était le couple Rh-C avec

$\alpha \simeq 13$
$T \simeq 3,7$        $R_{max}$ = 55,81

On a vu que de très bons résultats étaient obtenus en formant le système tricouche.

W/Rh/C

avec        $R_{max} \simeq 57,80$

et de très bonnes qualités technologiques.

Le tableau II donne les résultats théoriques dont on peut s'approcher en associant des matériaux lourds appropriés et empilés dans le bon sens, avec le couple Rh-C.

L'homme du métier est à même de déterminer, en s'aidant de l'enseignement de la présente invention, de nombreux systèmes tricouches appropriés à réaliser des miroirs multicouches d'une longueur d'onde, ou dans un domaine de longueurs d'onde déterminé.

On remarquera, au vu de la figure 7a, qui représente la réflectivité (en ordonnée) en fonction de l'angle d'incidence $\theta$ que le pic obtenu est plus large que pour un système bicouche. Cela est très favorable pour certaines applications, car la quantité de lumière intégrée est plus grande.

Les figures 8a à 8d permettent de comprendre physiquement l'origine de l'augmentation de réflectivité dans un système tricouche par rapport au meilleur des deux couples pouvant former un bicouche, qui le compose.

La figure 8a montre l'évolution de l'énergie E dans un miroir multicouche réel formé de systèmes bicouches tungstène-carbone (W-C), ainsi que le rapport $\delta/\delta_1$ des indices réels des deux matériaux en fonction de l'épaisseur Z traversée par la lumière.

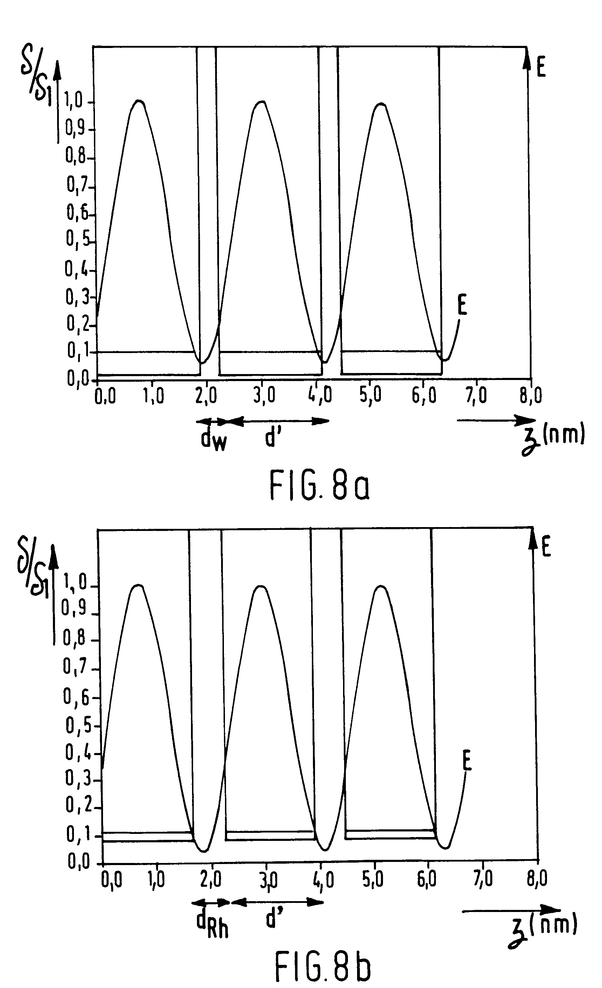

La figure 8b montre la même évolution lorsque le système bicouche est le rhodium-carbone (Rh-C).

Le contraste d'absorption $\alpha \simeq 75$ est plus important dans le système W-C que dans le système Rh-C ($\alpha \simeq 12$). Il en résulte que le profil d'indice est optimal lorsque dans ces systèmes l'épaisseur $d_W$ de la couche de W est notablement plus faible que celle $d_{Rh}$ de la couche de Rh, $\underline{d'}$ représentant l'épaisseur de la couche de carbone.

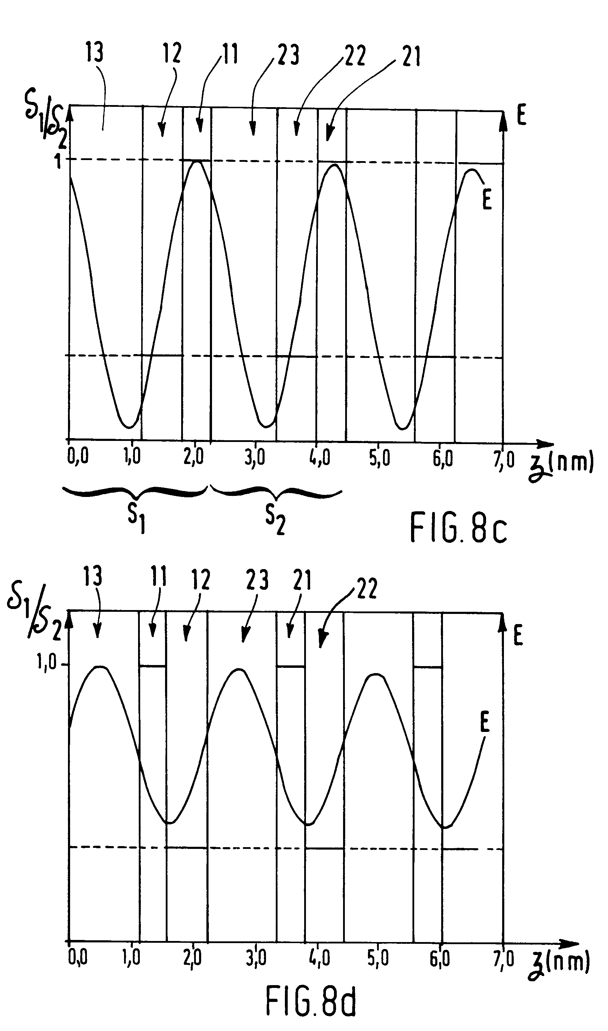

La figure 8c, montre la même évolution lorsque le système est un tricouche, dans lequel les couches sont empilées dans le sens préconisé par l'enseignement de l'invention : les maxima d'énergie se trouvent dans la couche réfléchissante et les minima dans la couche absorbante. On a superposé les profils d'indices $\delta_2/\delta_1$ réels pour montrer l'influence de l'empilement des matériaux lourds sur la quantité d'énergie réfléchie.

La figure 8d montre la même évolution dans un système tricouche dans lequel les deux matériaux lourds sont au contraire empilés dans "le mauvais sens", comme le prouve le profil des indices réels que l'on a superposé à la courbe d'énergie.

Les maxima d'énergie se trouvent en dehors de la couche réfléchissante et la réflectivité s'en trouve considérablement diminuée.

La réalisation technologique d'un miroir multicouche nécessite encore la connaissance du nombre de sys-

tème $S_1...S_n$ optimal pour s'approcher de la réflectivité maximale théorique. Ce nombre $N_{opt}$ peut être déterminé par le calcul avec les connaissances générales de l'homme du métier. Il est donné dans des cas particuliers sur les tableaux I, II, et III, pour une incidence normale.

Un procédé de réalisation pour former les miroirs multicouches décrits précédemment peut inclure la pulvérisation radiofréquence (pulvérisation rf) des matériaux choisis, sur un substrat. La pulvérisation rf consiste à appliquer une tension alternative à une cible afin d'en pulvériser le matériau sur un substrat. Cette méthode permet de travailler avec des vitesses de croissances de couches très variées O,001nm/s à 10nm/s. Plusieurs cibles différentes peuvent être disposées dans un même bâti soumis à un vide de base de l'ordre de, ou meilleur que $10^{-2}/760Pa$ ($10^{-7}$ Torr ; avec 1 Torr = 1 mmHg = 1/760 Bar = $10^5/760$ Pa). L'échantillon est placé alternativement sous chaque cible par exemple par des rotations effectuées en quelques secondes. Un système de volets peut couvrir ou découvrir l'échantillon pour le soumettre ou le soustraire à la pulvérisation d'un matériau. Un tel système permet de contrôler les temps de dépôt et donc les épaisseurs avec une grande précision.

Dans les exemples de réalisation exposés précédemment dans la description de l'invention, on a cité surtout des systèmes ayant le carbone comme espaceur.

On citera aussi le carbure de bore $C_4B$ qui a une densité légèrement plus faible que celle du carbone, et donc des performances potentielles plus intéressantes près des seuils d'absorption du bore et du carbone. De plus un effet de lissage de ce composé avec le tungstène (W) a été observé expérimentalement et est connu de l'homme du métier. Le sens d'empilement optimisé selon l'invention est

W/Rh/$B_4$C

et on observe une augmentation de la réflectivité intéressante dans la gamme :

6,76nm < $\lambda$ < 11,4nm

Les interfaces W-Rh sont pratiquement idéales. Les interfaces Rh-$B_4$C sont un peu moins bonnes, mais les performances du miroir à systèmes tricouches sont néanmoins meilleures que celles obtenues avec le meilleur des bicouches qui est Rh/$B_4$C.

TABLEAU I

| $\lambda = 4,47$ nm | , | Espaceur = Carbone | |
|---|---|---|---|
| Matériaux | $\beta$ | $R_{max}$ (%) | $N_{sat}$ |
| Li/C | 0.487 | 11.90 | 2742 |
| Be/C | 0.299 | 43.14 | 711 |
| B/C | 0.234 | 38.40 | 689 |
| F/C | 0.400 | 46.85 | 382 |
| Al/C | 0.242 | 42.21 | 639 |
| Si/C | 0.238 | 38.63 | 690 |
| Ca/C | 0.421 | 11.72 | 2085 |
| Sc/C | 0.349 | 39.81 | 884 |
| Ti/C | 0.160 | 43.15 | 587 |
| V/C | 0.278 | 56.65 | 470 |
| Cr/C | 0.250 | 60.41 | 394 |
| Mn/C | 0.242 | 59.48 | 399 |
| Fe/C | 0.224 | 53.70 | 395 |
| Co/C | 0.209 | 58.66 | 386 |
| Ni/C | 0.199 | 58.43 | 382 |
| Cu/C | 0.197 | 56.84 | 399 |
| Zn/C | 0.214 | 52.74 | 489 |
| Ge/C | 0.208 | 42.20 | 600 |
| As/C | 0.199 | 41.17 | 607 |
| Sr/C | 0.234 | 22.66 | 985 |
| Y/C | 0.213 | 23.98 | 921 |
| Zr/C | 0.208 | 29.94 | 796 |
| Nb/C | 0.197 | 30.12 | 730 |
| Mo/C | 0.204 | 29.46 | 300 |
| Ru/C | 0.259 | 55.13 | 471 |
| Rh/C | 0.269 | 55.31 | 472 |
| Pd/C | 0.236 | 44.33 | 600 |
| Ag/C | 0.240 | 46.66 | 570 |
| Cd/C | 0.281 | 50.38 | 564 |
| Sb/C | 0.292 | 44.93 | 667 |
| Ba/C | 0.383 | 46.02 | 849 |
| La/C | 0.284 | 46.50 | 628 |
| Hf/C | 0.176 | 41.42 | 583 |
| Ta/C | 0.163 | 43.60 | 544 |
| W/C | 0.154 | 44.71 | 524 |
| Re/C | 0.152 | 46.06 | 505 |
| Os/C | 0.152 | 46.27 | 503 |
| Ir/C | 0.153 | 43.36 | 541 |
| Pt/C | 0.157 | 42.77 | 551 |
| Au/C | 0.165 | 39.54 | 602 |
| | | | |
| $B_4C/C$ | 0.249 | 35.30 | 761 |

TABLEAU II

| λ = 4,47 nm , | Espaceur = Carbone | | | |
|---|---|---|---|---|
| Matériaux | B | C | $R_{max}$ (%) | $N_{ord}$ |
| Rh/C | 0.269 | | 55.89 | 472 |
| Rh/Li/C | 0.252 | 0.184 | 56.76 | 489 |
| Rh/F/C | 0.219 | 0.141 | 58.10 | 487 |
| B/Rh/C | 0.003 | 0.262 | 55.79 | 477 |
| Al/Rh/C | 0.024 | 0.248 | 55.85 | 474 |
| Si/Rh/C | 0.026 | 0.245 | 55.67 | 478 |
| Rh/Sc/C | 0.257 | 0.016 | 55.82 | 482 |
| Rh/Ti/C | 0.235 | 0.049 | 56.08 | 475 |
| Mn/Rh/C | 0.220 | 0.030 | 59.56 | 400 |
| Fe/Rh/C | 0.173 | 0.072 | 59.56 | 395 |
| Co/Rh/C | 0.163 | 0.084 | 60.09 | 383 |
| Ni/Rh/C | 0.151 | 0.095 | 60.39 | 377 |
| Cu/Rh/C | 0.141 | 0.109 | 59.62 | 389 |
| Zn/Rh/C | 0.097 | 0.163 | 57.13 | 448 |
| Ge/Rh/C | 0.057 | 0.215 | 56.16 | 467 |
| As/Rh/C | 0.058 | 0.214 | 56.27 | 466 |
| Sr/Rh/C | 0.035 | 0.251 | 55.96 | 476 |
| Y/Rh/C | 0.042 | 0.246 | 56.07 | 475 |
| Zr/Rh/C | 0.039 | 0.244 | 56.08 | 469 |
| Nb/Rh/C | 0.046 | 0.240 | 56.22 | 465 |
| Mo/Rh/C | 0.043 | 0.242 | 56.13 | 468 |
| Pd/Rh/C | 0.034 | 0.233 | 55.88 | 473 |
| Ag/Rh/C | 0.035 | 0.234 | 55.87 | 476 |
| Rh/Cr/C | 0.003 | 0.245 | 60.39 | 397 |
| Hf/Rh/C | 0.070 | 0.201 | 56.81 | 455 |
| Ta/Rh/C | 0.075 | 0.192 | 57.38 | 443 |
| W/Rh/C | 0.077 | 0.188 | 57.80 | 433 |
| Re/Rh/C | 0.080 | 0.184 | 58.12 | 423 |
| Os/Rh/C | 0.080 | 0.184 | 58.15 | 422 |
| Ir/Rh/C | 0.074 | 0.193 | 57.67 | 437 |
| Pt/Rh/C | 0.073 | 0.195 | 57.48 | 441 |
| Au/Rh/C | 0.066 | 0.206 | 56.98 | 455 |

13

TABLEAU III

| $\lambda$ = 4,47 nm, | | Espaceur = Carbone | | |
|---|---|---|---|---|
| Matériaux | B | C | $R_{max}$ (%) | $N_{tot}$ |
| Cr/C | 0.250 | | 60.40 | 394 |
| Cr/Li/C | 0.235 | 0.190 | 61.18 | 408 |
| B/Cr/C | 0.015 | 0.239 | 60.42 | 397 |
| Al/Cr/C | 0.013 | 0.237 | 60.40 | 401 |
| Si/Cr/C | 0.015 | 0.239 | 60.42 | 397 |
| Cr/Sc/C | 0.244 | 0.009 | 60.40 | 399 |
| Ti/Cr/C | 0.055 | 0.200 | 61.11 | 384 |
| Mn/Cr/C | 0.114 | 0.134 | 60.46 | 395 |
| Fe/Cr/C | 0.113 | 0.133 | 60.98 | 384 |
| Co/Cr/C | 0.119 | 0.124 | 61.56 | 372 |
| Ni/Cr/C | 0.118 | 0.123 | 61.95 | 364 |
| Cu/Cr/C | 0.104 | 0.138 | 61.57 | 373 |
| Zn/Cr/C | 0.053 | 0.195 | 60.54 | 396 |
| Ge/Cr/C | 0.027 | 0.227 | 60.49 | 396 |
| As/Cr/C | 0.032 | 0.222 | 60.53 | 397 |
| Sr/Cr/C | 0.027 | 0.237 | 60.47 | 400 |
| Y/Cr/C | 0.032 | 0.237 | 60.54 | 395 |
| Zr/Cr/C | 0.028 | 0.232 | 60.51 | 398 |
| Nb/Cr/C | 0.034 | 0.228 | 60.58 | 399 |
| Mo/Cr/C | 0.031 | 0.230 | 60.54 | 399 |
| Pd/Cr/C | 0.014 | 0.236 | 60.41 | 397 |
| Ag/Cr/C | 0.011 | 0.238 | 60.40 | 400 |
| Cr/Ba/C | 0.221 | 0.100 | 61.45 | 400 |
| Hf/Cr/C | 0.046 | 0.210 | 60.78 | 391 |
| Ta/Cr/C | 0.055 | 0.200 | 61.07 | 384 |
| W/Cr/C | 0.059 | 0.195 | 61.31 | 379 |
| Re/Cr/C | 0.062 | 0.187 | 61.45 | 381 |
| Os/Cr/C | 0.063 | 0.185 | 61.46 | 383 |
| Ir/Cr/C | 0.057 | 0.197 | 61.27 | 383 |
| Pt/Cr/C | 0.055 | 0.200 | 61.17 | 385 |
| Au/Cr/C | 0.048 | 0.210 | 60.72 | 391 |

## Revendications

1. Dispositif du type miroir dans le domaine des rayons X-UV, comprenant l'empilement périodique ($S_1$, $S_2$, ...$S_n$) sur un support (10) d'undit système de couches superposées lequel inclut une couche inférieure (11; 21; ...n1) d'un élément du tableau de Mendeleeff dont le numéro atomique Z est élevé, dit premier élément lourd ($Me_1$), réfléchissant aux longueurs d'onde d'utilisation du miroir, et une couche supérieure (13; 23; ...n3) d'un élément du tableau de Mendeleeff dont le numéro atomique Z est faible, dit élément léger (Sp) espaceur, optiquement peu absorbant auxdites longueurs d'onde, caractérisé en ce que ledit système de couches superposées (11,13) comprend, entre ladite couche inférieure (11) et ladite couche supérieure (13), une couche intermédiaire (12) d'undit second élément lourd ($Me_2$) réfléchissant aux longueurs d'onde d'utilisation pour former un système tricouche (11,12,13), et en que les premier et second éléments lourds ($Me_1$, $Me_2$) des couches inférieure (11) et intermédiaire (12) forment respectivement avec l'élément léger espaceur (Sp) de la couche supérieure (13) un premier et un second couples (Me1-Sp ; Me2-Sp) tels que le premier couple ($Me_1$-Sp) présente un contraste d'absorption plus élève $\alpha_1 > \alpha_2$ et un rapport de contraste d'indices moins élevé $T_1 < T_2$ que le second couple ($Me_2$-Sp),

   - les contrastes d'absorption $\alpha_1$ et $\alpha_2$ des premier et deuxième couples étant définis à partir des parties imaginaires Im $\varepsilon_1$, Im $\varepsilon_2$ et Im $\varepsilon_3$ des susceptibilités électriques $\varepsilon_1$, $\varepsilon_2$ et $\varepsilon_3$ respectives du premier élément lourd ($Me_1$), du deuxième élément lourd ($Me_2$) et de l'élément léger (Sp) par les rapports :

$$\alpha_1 = \frac{\text{Im } \varepsilon_1}{\text{Im } \varepsilon_3} - 1 \qquad \text{et } \alpha_2 = \frac{\text{Im } \varepsilon_2}{\text{Im } \varepsilon_3} - 1$$

   - et les rapports de contraste d'indices $T_1$ et $T_2$ des premier et deuxième couples étant définis à partir des parties imaginaires Im $\varepsilon_1$, Im $\varepsilon_2$ et Im $\varepsilon_3$ et des parties réelles Re $\varepsilon_1$, Re $\varepsilon_2$ et Re $\varepsilon_3$ de ces susceptibilités électriques par les rapports :

$$T_1 = \frac{\text{Re} (\varepsilon_1 - \varepsilon_3)}{\text{Im} (\varepsilon_1 - \varepsilon_3)} \text{ et } T_2 = \frac{\text{Re} (\varepsilon_2 - \varepsilon_3)}{\text{Im} (\varepsilon_2 - \varepsilon_3)}$$

2. Dispositif selon la revendication 1, caractérisé en ce que les éléments lourds et l'élément léger sont tels que les réflectivités potentielles desdits couples du système tricouche sont équivalentes.

3. Dispositif selon l'une des revendications 1 ou 2, caractérisé en ce que l'élément lourd de la couche intermédiaire est tel qu'il présente avec l'élément lourd de la couche inférieure et l'élément léger de la couche supérieure la plus faible interdiffusion et une rugosité d'interface minimale.

4. Dispositif selon l'une des revendications précédentes caractérisé en ce que l'élément léger est le carbone C ou le carbure de bore $B_4C$.

5. Dispositif selon la revendication 4 caractérisé en ce que le système tricouche est composé de l'empilement W-Rh-C dans cet ordre.

6. Dispositif selon la revendication 4, caractérisé en ce que le système tricouche est composé de l'empilement Os-Sb-C dans cet ordre.

7. Dispositif selon la revendication 4, caractérisé en ce que le système tricouche est formé de l'un des empilements :

   Cr - Li - C
   Ti - Cr - C
   Ni - Cr - C
   W - Cr - C
   Pt - Cr - C
   Au - Cr - C
   Os - Cr - C,

   les matériaux étant empilés dans l'odre indiqué.

8. Dispositif selon la revendication 4, caractérisé en ce que le système tricouche est composé de W-Rh-$B_4C$ empilés dans cet ordre.

**Patentansprüche**

1. Spiegeleinrichtung für den Bereich der UV- und Röntgenstrahlen, die auf einem Träger (10) den periodischen Stapel ($S_1$, $S_2$...$S_n$) eines sog. Systems überlagerter Schichten enthält, das eine untere Schicht (11; 21; ...n1) eines ersten Elements der Mendeleeff-Tafel mit höherer Atomzahl Z mit der Bezeichnung des ersten Schwerelements umfaßt, das auf den Wellenlängen bei Anwendung des Spiegels reflektiert, und eine obere Schicht (13; 23; ...n3) eines Elements der Mendeleeff-Tafel mit niedrigerer Atomzahl Z mit der Bezeichnung des leichten Distanzelements umfaßt, das bei diesen Wellenlängen eine niedrige optische Absorption aufweist, dadurch gekennzeichnet, daß das System der überlagerten Schichten (11, 13) zwischen der unteren Schicht (11) und der oberen Schicht (13) eine Zwischenschicht (12) aus einem sog. zweiten schweren Element (Me$_2$) enthält, das auf den Anwendungswellenlängen zur Bildung eines Dreischichtensystems (11, 12, 13) retlektiert, und daß die ersten und zweiten schweren Elemente (Me$_1$, Me$_2$) der unteren (11) und Zwischenschichten (12) mit dem leichteren Distanzelement (Sp) der oberen Schicht (13) ein erstes bzw. ein zweites Paar (Me1-Sp; Me2-Sp) derart bilden, daß das erste Paar (Me1-Sp) einen höheren Absorptionskontrast $\alpha1 > \alpha2$ besitzt und ein niedrigeres Kontrastverhältnis der Indizes $T_1 > T_2$ als das zweite Paar (Me2-Sp) hat,
   - die Absorptionskontraste $\alpha1$ und $\alpha2$ der ersten und zweiten Paare ausgehend von imaginären Anteilen Im$\varepsilon_1$, Im$\varepsilon_2$ und Im$\varepsilon_3$ der elektrischen Suszeptibilitäten $\varepsilon_1$, $\varepsilon_2$ und $\varepsilon_3$ durch folgende Gleichungen definiert werden

$$\alpha1 = \frac{Im\varepsilon_1}{Im\varepsilon_3} - 1 \; und \; \alpha2 = \frac{Im\varepsilon_2}{Im\varepsilon_3} - 1$$

   - und die Kontrastverhältnisse der Indizes $T_1$ und $T_2$ des ersten schweren Elements, des zweiten schweren Elements bzw. des leichten Elements ausgehend von den imaginären Anteilen Im$\varepsilon_1$, Im$\varepsilon_2$ und Im$\varepsilon_3$ und von den Realanteilen Re$\varepsilon_1$, Re$\varepsilon_2$ und Re$\varepsilon_3$ dieser elektrischen Suszeptibilitäten durch folgende Gleichungen definiert werden:

$$T_1 = \frac{Re(\varepsilon_1 - \varepsilon_3)}{Im(\varepsilon_1 - \varepsilon_3)} \; und \; T_2 = \frac{Re(\varepsilon_2 - \varepsilon_3)}{Im(\varepsilon_2 - \varepsilon_3)}$$

2. Spiegeleinrichtung nach Anspruch 1, dadurch gekennzeichnet, daß die schweren Elemente und das leichte Element derart beschaffen sind, daß die potentiellen Reflexionskräfte der Dreischichtensystempaare gleichwertig sind.

3. Spiegeleinrichtung nach einem der Ansprüche 1 oder 2, dadurch gekennzeichnet, daß das schwere Element der Zwischenschicht derart beschaffen ist, daß es mit dem schweren Element der oberen Schicht und mit dem leichten Element der oberen Schicht die schwächste Interdiffusion und eine minimale Grenzflächenrauheit aufweist.

4. Spiegeleinrichtung nach einem oder mehreren der vorangehenden Ansprüche, dadurch gekennzeichnet, daß das leichte Element der Kohlenstoff C oder das Borkarbid B$_4$C ist.

5. Spiegeleinrichtung nach Anspruch 4, dadurch gekennzeichnet, daß das Dreischichtensystem aus der Stapelung W-Rh-C in dieser Reihenfolge besteht.

6. Spiegeleinrichtung nach Anspruch 4, dadurch gekennzeichnet, daß das Dreischichtensystem aus der Stapelung Os-Sb-C in dieser Reihenfolge besteht.

7. Spiegeleinrichtung nach Anspruch 4, dadurch gekennzeichnet, daß das Dreischichtensystem aus einem der folgenden Stapel besteht:
   Cr - Li - C
   Ti - Cr - C
   Ni - Cr - C
   W - Cr - C
   Pt - Cr - C
   Au - Cr - C
   Os - Cr - C,
   wobei die Werkstoffe in dieser Reihenfolge gestapelt sind.

8. Spiegeleinrichtung nach Anspruch 4, dadurch gekennzeichnet, daß das Dreischichtensystem aus der Stapelung von W-Rh-B$_4$-C in dieser Reihenfolge besteht.

**Claims**

1. A mirror-type device for the UV and X-ray range, comprising the periodic stacking ($S_1$, $S_2$... $S_n$) on a support (10) of a so-called system of superposed layers which includes a lower layer (11, 21, ... n1) of an element of the periodic table whose atomic number Z is high, is referred to as the first heavy element (Me1), and is reflective for the wavelengths with which the mirror is used, and an upper layer (13, 23, ... $n_3$) of an element of the periodic table whose atomic number Z is low, is referred to as the light spacer element (Sp), and has a low optical absorption for said wavelengths, characterized in that the said system of superposed layers (11, 13) comprises, between the said lower layer (11) and the said upper layer (13), an intermediate layer (12) of a so-called second heavy element ($Me_2$), reflective for the wavelengths used, in order to form a three-layer system (11, 12, 13), and in that the first and second heavy elements ($Me_1$, $Me_2$) of the lower (11) and intermediate (12) layers form a first and a second pair ($Me_1$-Sp; $Me_2$-Sp) with the light spacer element (Sp) of the upper layer (13) in such a manner that the first pair ($Me_1$-Sp) exhibits an absorption contrast which is higher, $\alpha_1 > \alpha_2$, and an index contrast ratio which is lower, $T_1 < T_2$, in relation to the second pair ($Me_2$-Sp),

   - the absorption contrasts ($\alpha_1$ and $\alpha_2$ of the first and second pairs being defined on the basis of the imaginary parts $Im\varepsilon_1$, $Im\varepsilon_2$ and $Im\varepsilon_3$ of the electric susceptibilities $\varepsilon_1$, $\varepsilon_2$ and $\varepsilon_3$ of the first heavy element ($Me_1$), the second heavy element ($Me_2$) and the light element (Sp), respectively, by the ratios:

   $$\alpha_1 = \frac{Im\varepsilon_1}{Im\varepsilon_3} - 1 \text{ and } \alpha_2 = \frac{Im\varepsilon_2}{Im\varepsilon_3} - 1$$

   - and the index contrast ratios $T_1$ and $T_2$ of the first and second pairs being defined on the basis of the imaginary parts $Im\varepsilon_1$, $Im\varepsilon_2$ and $Im\varepsilon_3$ and the real parts $Re\varepsilon_1$, $Re\varepsilon_2$ and $Re\varepsilon_3$ of these electric susceptibilities by the ratios:

   $$T_1 = \frac{Re(\varepsilon_1 - \varepsilon_3)}{Im(\varepsilon_1 - \varepsilon_3)} \text{ and } T_2 = \frac{Re(\varepsilon_2 - \varepsilon_3)}{Im(\varepsilon_2 - \varepsilon_3)}.$$

2. A device as claimed in Claim 1, characterized in that the heavy elements and the light element are such that the potential reflectivities of said pairs of the three-layer system are equivalent.

3. A device as claimed in one of the claims 1 or 2, characterized in that the heavy element of the intermediate layer is such that it exhibits, together with the heavy element of the lower layer and the light element of the upper layer, the lowest interdiffusion and a minimum interface roughness.

4. A device as claimed in one of the preceding Claims, characterized in that the light element is carbon C or boron carbide $B_4C$.

5. A device as claimed in Claim 4, characterized in that the three-layer system is composed of the stack W-Rh-C in this order.

6. A device as claimed in Claim 4, characterized in that the three-layer system is composed of the stack Os-Sb-C in this order.

7. A device as claimed in Claim 4, characterized in that the three-layer system is formed by one of the stacks:
   Cr - Li - C
   Ti - Cr - C
   Ni - Cr - C
   W - Cr - C
   Pt - Cr - C
   Au - Cr - C
   Os - Cr - C
   the materials being stacked in the indicated order.

8. A device as claimed in Claim 4, characterized in that the three-layer system is composed of W-Rh-$B_4C$ stacked in this order.

FIG.1a

FIG.1b

FIG.2a

FIG.2b

FIG.3a

FIG.3b

FIG.3c

20

FIG. 4a

FIG. 4b

FIG.5a

FIG.5b

FIG.6a

FIG.6b

FIG. 6 c

FIG.7a

FIG.7b

FIG.7c

25

FIG. 8a

FIG.8b

FIG. 8c

FIG. 8d